# FASCICULE DE BREVET EUROPEEN

(11) **EP 3 187 829 B1**
(45) Date de publication et mention de la délivrance du brevet: **29.08.2018**
(21) Numéro de dépôt: 16206582.5
(22) Date de dépôt: 23.12.2016
(51) Int. Cl.: G01C 23/00, G06T 15/00

(54) **PROCEDE DE REPRESENTATION GRAPHIQUE D'UNE VUE SYNTHETIQUE TRIDIMENSIONNELLE DU PAYSAGE EXTERIEUR DANS UN SYSTEME DE VISUALISATION DE BORD POUR AERONEF**
GRAFISCHES DARSTELLUNGSVERFAHREN EINER KÜNSTLICHEN 3D-ANSICHT EINER ÄUSSEREN LANDSCHAFT IN EINEM BORD-ANZEIGESYSTEM FÜR LUFTFAHRZEUG
METHOD FOR GRAPHICALLY REPRESENTING A THREE-DIMENSIONAL SYNTHETIC VIEW OF THE EXTERNAL LANDSCAPE IN AN ON-BOARD DISPLAY SYSTEM FOR AN AIRCRAFT

(30) Priorité: 29.12.2015 FR 1502719
(43) Date de publication de la demande: 05.07.2017
(73) Titulaire: Thales, 92400 Courbevoie (FR)
(72) Inventeur: FRESTEL, Norbert, 33187 LE HAILLAN Cedex (FR); MONVOISIN, Emmanuel, 33187 LE HAILLAN Cedex (FR); MARIANI, Pierre, 33187 LE HAILLAN Cedex (FR); LUX, Johanna, 33187 LE HAILLAN Cedex (FR)
(74) Mandataire: Bréda, Jean-Marc

(56) Documents cités:
- EP-A1- 2 717 228
- EP-A2- 2 221 583
- EP-A2- 2 613 125
- Honeywell: "Vision Systems Overview EVS EFVS SVS CVS C&PS Flight Technical Services January 2013", , 31 mars 2013 (2013-03-31), XP055154204, Extrait de l'Internet: URL:https://www.mygdc.com/assets/public_fi les/gdc_services/pilot_services/presentati ons/Vision_Systems_Overview.pdf [extrait le 2014-11-20]

## Description

Le domaine de l'invention est celui des interfaces homme-système pour des applications aéronautiques, et plus particulièrement celui des systèmes de visualisation synthétiques comportant des moyens d'afficher une image synthétique tridimensionnelle du paysage extérieur.

Les aéronefs modernes possèdent généralement un système de vision synthétique dit « SVS », acronyme de « Synthetic Vision System ». Ce système permet de présenter à l'équipage une image synthétique du paysage extérieur comportant généralement des informations sur le pilotage ou la navigation.

Un système SVS comporte une base de données cartographique représentative du terrain survolé, un système de géolocalisation, des moyens de calcul électroniques et un ou plusieurs dispositifs de visualisation implantés dans le cockpit de l'aéronef. Le système de géolocalisation est du type « GPS », acronyme de « Global Positioning System ». Il peut être couplé avec le système inertiel de l'appareil. L'ensemble du système de géolocalisation fournit au moins les paramètres suivants : position de l'aéronef en latitude, longitude et altitude et orientation de l'aéronef en tangage, roulis et cap.

Généralement, l'image est affichée sur les écrans de visualisation qui se trouvent en face avant de la planche de bord de l'aéronef. L'image est une vue tridimensionnelle de l'extérieur représentée de la façon la plus réaliste possible. Le point de vue affiché est dans l'axe de l'appareil. L'image synthétique est calculée jusqu'à une certaine distance de l'aéronef de façon à limiter les calculs nécessaires à l'affichage. On appelle cette distance « range SVS ». Son ordre de grandeur est de 40 miles nautiques. En effet, au-delà d'une certaine distance, l'image du paysage est de faibles dimensions. Par ailleurs, elle n'a plus qu'un faible intérêt pour le pilotage de l'appareil.

Cette image synthétique comporte généralement une symbologie d'aide au pilotage et à la navigation. Elle comporte classiquement un horizon artificiel donnant l'attitude de l'appareil et des indicateurs donnant l'altitude et la vitesse de l'aéronef. Cette symbologie affiche également une ligne représentant l'indicateur d'assiette longitudinal nulle, encore appelé « ZPRL », acronyme anglo-saxon signifiant « Zero Pitch Reference Line ». Par abus de langage, la « ZPRL » est souvent appelé « Ligne d'horizon ».

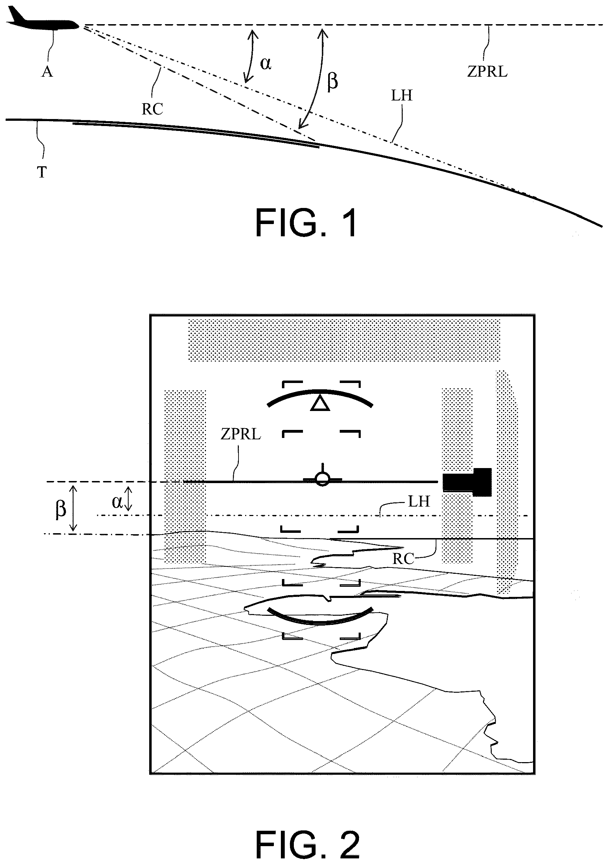

Comme on le voit sur la figure 1 qui représente une vue en coupe verticale d'un aéronef A survolant un terrain T, la ZPRL fait avec la ligne d'horizon vraie LH un premier angle a. Cette ligne fait avec la limite de la représentation cartographique RC un second angle β nécessairement supérieur au premier angle. Ces angles font généralement plusieurs degrés.

La figure 2 représente l'affichage, sur un dispositif de visualisation d'aéronef, d'une représentation cartographique du terrain survolé comportant une symbologie de pilotage. Cette symbologie comporte une ZPRL. Sur cette figure, la différence entre cette ZPRL et la fin de la représentation cartographique est notable. Il a été démontré qu'un écart angulaire significatif entre le range SVS et la ZPRL est très perturbant pour les pilotes car il ne correspond pas aux ordres de grandeurs visuels habituels. Cela se produit surtout en haute altitude, l'écart augmentant avec l'altitude de l'aéronef.

Par ailleurs, certaines normes aéronautiques comme la norme AC 20-167 intitulée « Airworthiness Approval of Enhanced Vision System, Synthetic Vision System, Combined Vision System, and Enhanced Flight Vision System Equipment » imposent que les informations apportées par le SVS soient corrélées à la ZPRL. Par exemple, le terrain qui se trouve au-dessus de l'altitude du porteur à un instant donné doit toujours apparaître au-dessus de la ZPRL, s'il est suffisamment proche pour être dangereux.
Le document intitulé "Vision Systems Overview" par Honeywell publié en Janvier 2013, présente un état de la technique des systèmes d'affichage aéronautiques dont les systèmes d'affichage synthétiques.

Un moyen de résoudre ces différents problèmes est d'afficher une représentation cartographique sur de plus longues distances. Le défaut de cette solution est un besoin supplémentaire important en performances de la plateforme électronique tant au niveau du processeur central que des moyens de calculs graphiques pour permettre l'affichage de l'image à la fréquence et à la qualité d'image attendues.

Le procédé de représentation cartographique selon l'invention ne présente pas ces inconvénients. Classiquement, la représentation cartographique est représentée en position conforme, c'est-à-dire qu'elle se superpose parfaitement au terrain qu'elle représente aux incertitudes de positionnement près. Dans le système de visualisation selon l'invention, la représentation cartographique est basculée de façon à rapprocher artificiellement la limite de la représentation cartographique de l'horizon vrai. Plus précisément, l'invention a pour objet un procédé de représentation graphique d'une vue synthétique tridimensionnelle du paysage extérieur dans un système de visualisation de bord pour aéronef, ladite représentation graphique étant affichée sur un écran de visualisation comportant les informations de pilotage et de navigation dudit aéronef superposées à ladite représentation synthétique tridimensionnelle du paysage extérieur, ladite représentation synthétique étant calculée jusqu'à une première distance déterminée, caractérisé en ce que ladite représentation synthétique tridimensionnelle est basculée d'un angle de basculement autour d'un axe disposé au niveau du terrain dans un plan sensiblement horizontal et sensiblement perpendiculairement à un axe compris entre la direction de vol et le cap de l'aéronef, ledit axe se déplaçant avec l'aéronef.

Avantageusement, l'axe est positionné sensiblement à la verticale de l'aéronef.

Avantageusement, l'axe est positionné en avant de l'aéronef, à une seconde distance comprise entre quelques dixièmes de miles nautiques et quarante miles nautiques.

Avantageusement, au dessous d'une différence déterminée d'altitude entre l'aéronef et le terrain survolé, l'angle de basculement est nul.

Avantageusement, la différence déterminée d'altitude entre l'aéronef et le terrain survolé vaut 7500 pieds.

Avantageusement, au dessus d'une différence déterminée d'altitude entre l'aéronef et le terrain survolé, l'angle de basculement augmente avec l'altitude.

Avantageusement, l'angle de basculement est déterminé de façon que la différence angulaire entre la limite de la représentation tridimensionnelle du paysage extérieur calculée jusqu'à la première distance déterminée et une ligne représentant l'horizon vrai soit inférieure à un degré.

Avantageusement, le dispositif de visualisation comporte une image réelle du paysage extérieur en superposition sur la vue synthétique du paysage extérieur.

Avantageusement, le dispositif de visualisation est un des écrans de la planche de bord de l'aéronef.

Avantageusement, le dispositif de visualisation est un dispositif de visualisation dit « Tête Haute » comportant un élément optique superposant l'image synthétique et/ou l'image réelle sur le paysage extérieur.

L'invention sera mieux comprise et d'autres avantages apparaîtront à la lecture de la description qui va suivre donnée à titre non limitatif et grâce aux figures annexées parmi lesquelles :
La figure 1 représente une vue en coupe verticale d'un aéronef survolant un terrain ;
La figure 2 représente l'affichage sur un dispositif de visualisation d'aéronef d'une représentation cartographique du terrain survolé comportant une symbologie de pilotage selon l'art antérieur ;
Les figures 3 et 4 représentent le principe de basculement de la représentation cartographique mis en oeuvre dans le procédé selon l'invention ;
La figure 5 représente une première variante du procédé précédent dans laquelle le basculement de l'axe est excentré ;
La figure 6 représente la variation de basculement de l'axe en fonction de l'altitude de l'aéronef ;
Les figures 7 et 8 représentent le comportement dynamique de la représentation graphique selon l'invention ;
La figure 9 représente, en fonction de l'altitude, des écarts angulaires entre la ZPRL et la ligne d'horizon vraie et entre la ZPRL et la limite de la représentation cartographique avant et après correction par le procédé selon l'invention ;
La figure 10 représente l'affichage sur un dispositif de visualisation d'aéronef d'une représentation cartographique du terrain survolé comportant une symbologie de pilotage selon l'invention.

Le procédé selon l'invention est mis en oeuvre dans un système de visualisation synthétique ou SVS embarqué sur aéronef. Celui-ci comporte au moins une base de données cartographique, des moyens de géolocalisation, des moyens électroniques permettant de calculer une représentation des principaux paramètres de l'aéronef, un calculateur graphique et au moins un dispositif de visualisation. Les moyens de géolocalisation sont, à titre d'exemple, de type « GPS », acronyme de « Global Positioning System » couplés/hybridés ou non avec des centrales inertielles.

L'affichage sur l'écran du dispositif de visualisation représente une vue synthétique tridimensionnelle du terrain survolé. Cette représentation synthétique est calculée jusqu'à une première distance déterminée, appelée « range SVS ». Cette vue comporte une symbologie d'aide au pilotage et à la navigation. Elle comporte classiquement un horizon artificiel donnant l'attitude de l'appareil et des indicateurs donnant l'altitude et la vitesse de l'aéronef. Elle comporte également une ligne représentant l'indicateur d'assiette longitudinal nulle, encore appelée « ZPRL ».

Ces écrans peuvent aussi afficher, à la place du SVS, une image réelle du paysage extérieur, issue d'un système dit « EVS », acronyme de « Enhanced Vision System », ou afficher cette image réelle en superposition sur la vue synthétique du paysage extérieur, on parlera alors de « CVS », acronyme de « Combined Vision System ».

Le dispositif de visualisation peut être également un dispositif de visualisation dit « Tête Haute » comportant un élément optique superposant l'image synthétique et/ou l'image réelle sur le paysage extérieur.

Dans le procédé de représentation graphique du terrain selon l'invention, la représentation synthétique tridimensionnelle est basculée d'un angle de basculement θ autour d'un axe X disposé au niveau du terrain dans un plan sensiblement horizontal et sensiblement perpendiculairement à un axe compris entre la direction de vol et le cap de l'aéronef, ledit axe se déplaçant avec l'aéronef. Cet axe est symbolisé par une croix cerclée sur les différentes figures.

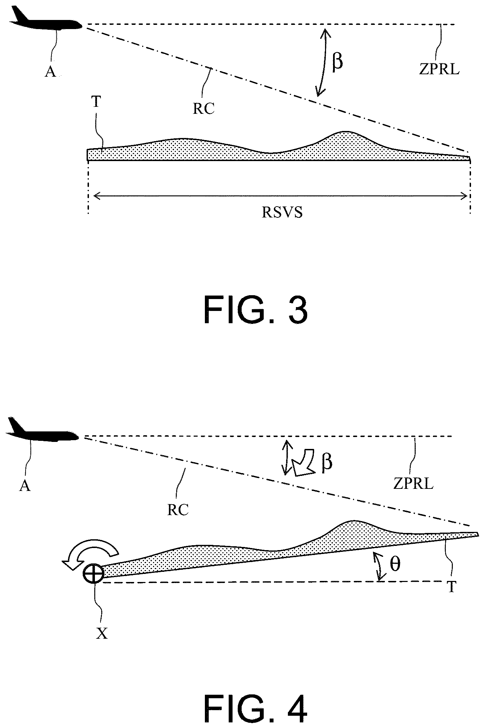

Cette fonction de basculement est illustrée sur les figures 3 et 4 qui représentent dans un plan de coupe vertical la représentation du terrain T survolé par un aéronef A avant et après basculement. Le range SVS est noté RSVS sur ces figures et les suivantes. Sur ces figures, on a également représenté la limite de la représentation cartographique RC et la ligne ZPRL représentant l'indicateur d'assiette longitudinal nulle.

Comme on le voit sur la figure 4, cette rotation de la représentation du terrain permet de diminuer l'angle entre la ZPRL et la ligne de range SVS. On peut ainsi la rapprocher, voir la confondre avec l'horizon vrai.

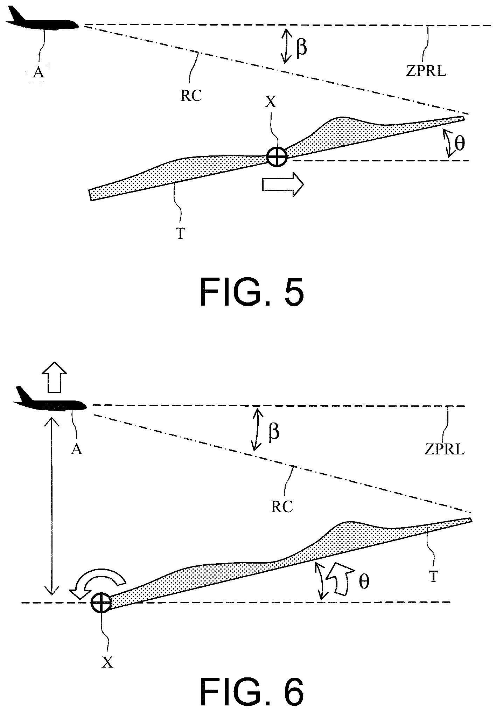

Sur la figure 4, l'axe X est situé à la verticale de l'appareil. On peut, comme on le voit sur la figure 5, le positionner en avant de l'aéronef, à une seconde distance comprise entre quelques miles nautiques et vingt miles nautiques. Dans ce cas, le terrain situé sous l'aéronef est représenté à une altitude supérieure à son altitude réelle.

Au dessus d'une certaine altitude de l'aéronef, l'angle de basculement peut augmenter avec l'altitude H comme on le voit sur la figure 6.

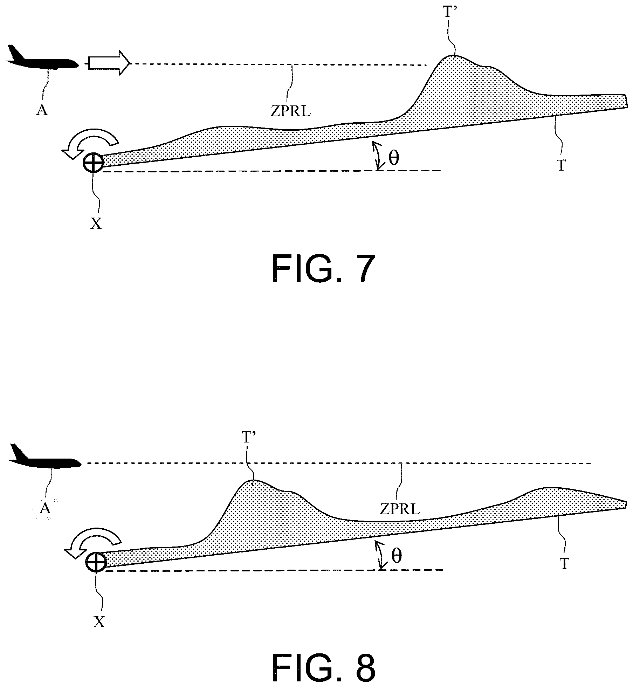

Le procédé selon l'invention engendre des erreurs d'altitude sur le terrain affiché en fond de scène, c'est-à-dire que le terrain peut être vu comme étant au-dessus du porteur alors qu'il ne l'est pas en réalité comme on le voit sur la figure 7 où le terrain T' est au-dessus de la ZPRL. Cette situation n'a pas de conséquences importantes dans la mesure où certaines normes spécifient que le terrain qui se trouve au-dessus de l'altitude du porteur à un instant donné doit apparaître au-dessus de la ZPRL. Le procédé selon l'invention fait simplement apparaitre plus souvent le terrain au-dessus de la ZPRL qu'il ne l'est en réalité. C'est donc une solution plus prudente que l'état de l'art, et cela participe à corriger le sentiment que la visualisation SVS n'est parfois pas suffisamment alarmante. Enfin, comme on le voit sur la figure 8, cette situation ne perdure pas. Par principe, dès que l'on se rapproche de l'obstacle, l'obstacle reprend peu à peu son altitude exacte.

Dans le cas décrit ci-dessus, l'erreur de positionnement en fonction de l'altitude peut engendrer des erreurs angulaires importantes, supérieures au degré sur les terrains en haute altitude. La solution est alors de baser le basculement de l'axe par rapport à l'altitude du terrain la plus basse de la scène environnante. Cela implique que le moteur graphique soit capable de déterminer les altitudes minimales et maximales de la scène environnante, ce qui ne pose pas de problèmes techniques particuliers. Il faut alors mettre en place des filtres temporels et/ou spatiaux pour gérer les variations brutales de l'altitude minimale de la scène environnante. Cette solution réduit les occurrences d'erreurs d'affichage du terrain en fond de scène.

Dans ce cas, l'angle de basculement dépend non pas de l'altitude de l'aéronef, mais de la différence d'altitude entre la position de l'aéronef et le terrain survolé. Ainsi, en dessous d'une différence déterminée d'altitude entre l'aéronef et le terrain survolé, l'angle de basculement peut être nul. Cette distance vaut, par exemple, 7500 pieds.

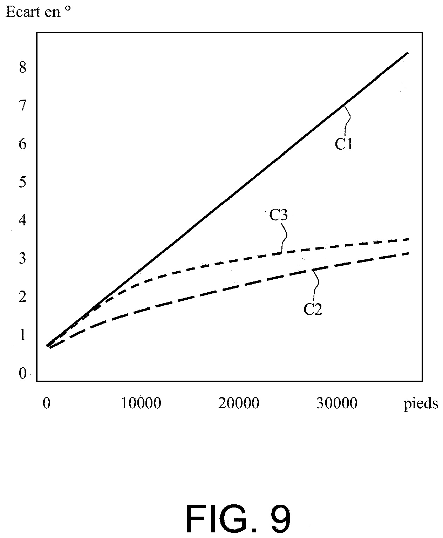

A titre d'exemple, les trois courbes de la figure 9 notées C1, C2 et C3 représentent, en fonction de l'altitude,
- C1 : les écarts angulaires entre la ZPRL et la limite de la représentation cartographique sans corrections ;
- C2 : les écarts angulaires entre la ZPRL et l'horizon vrai ;
- C3 : les écarts angulaires entre la ZPRL et la limite de la représentation cartographique après corrections.

L'altitude varie de 0 à 30000 pieds et l'écart angulaire avant corrections peut atteindre 8 degrés à haute altitude alors qu'il est limité autour de 3 degrés après corrections. Par ailleurs, la limite de la représentation cartographique après corrections est très voisine de l'horizon vrai, ce qui est un des principaux buts recherchés.

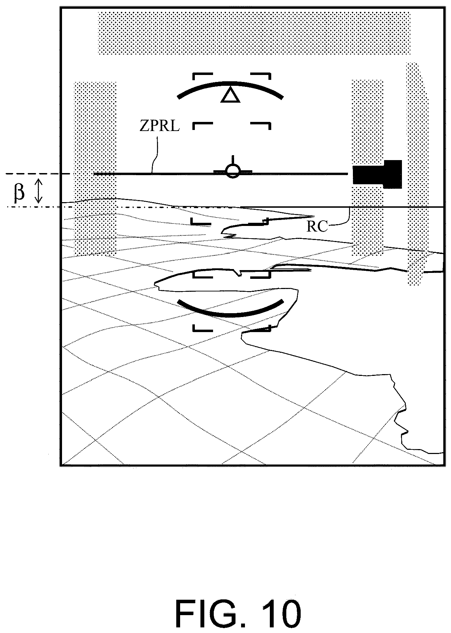

A titre d'exemple, la figure 10 représente l'affichage sur un dispositif de visualisation d'aéronef d'une représentation cartographique du terrain survolé selon le procédé selon l'invention comportant une symbologie de pilotage. On constate que l'écart angulaire entre la ZPRL et la limite de la représentation cartographique a notablement diminué par rapport à celui de la figure 2 qui représente la même scène. La limite de la représentation cartographique est maintenant confondue avec la ligne d'horizon vraie.

## Revendications

1. Procédé de représentation graphique d'une vue synthétique tridimensionnelle du paysage extérieur dans un système de visualisation de bord pour aéronef (A), ladite représentation graphique étant affichée sur un écran de visualisation comportant les informations de pilotage et/ou de navigation dudit aéronef superposées à ladite représentation synthétique tridimensionnelle du paysage extérieur, ladite représentation synthétique étant calculée jusqu'à une première distance déterminée (RSVS), ladite représentation synthétique tridimensionnelle étant basculée d'un angle de basculement (θ) autour d'un axe (X) disposé au niveau du terrain dans un plan sensiblement horizontal et sensiblement perpendiculairement à un axe compris entre la direction de vol et le cap de l'aéronef, ledit axe se déplaçant avec l'aéronef, le procédé étant **caractérisé en ce que** ledit angle de basculement est calculé de façon que l'angle entre une ligne d'horizon ou « ZPRL » et la limite de la représentation synthétique calculée jusqu'à une première distance déterminée soit limité à 3 degrés.

2. Procédé de représentation graphique selon la revendication 1, **caractérisé en ce que** l'axe est positionné sensiblement à la verticale de l'aéronef.

3. Procédé de représentation graphique selon la revendication 1, **caractérisé en ce que** l'axe est positionné en avant de l'aéronef, à une seconde distance comprise entre quelques dixièmes de miles nautiques et quarante miles nautiques.

4. Procédé de représentation graphique selon la revendication 1, **caractérisé en ce qu'**en dessous d'une différence déterminée d'altitude entre l'aéronef et le terrain survolé, l'angle de basculement est nul.

5. Procédé de représentation graphique selon la revendication 4, **caractérisé en ce que** la différence déterminée d'altitude entre l'aéronef et le terrain survolé vaut 7500 pieds.

6. Procédé de représentation graphique selon la revendication 1, **caractérisé en ce qu'**au dessus d'une différence déterminée d'altitude entre l'aéronef et le terrain survolé, l'angle de basculement augmente avec l'altitude.

7. Procédé de représentation graphique selon l'une des revendications précédentes, **caractérisé en ce que** l'angle de basculement est déterminé de façon que la différence angulaire entre la limite de la représentation tridimensionnelle du paysage extérieur calculée jusqu'à la première distance déterminée et une ligne représentant l'horizon vrai soit inférieure à un degré.

8. Procédé de représentation graphique selon l'une des revendications précédentes, **caractérisé en ce que** le dispositif de visualisation comporte une image réelle du paysage extérieur en superposition sur la vue synthétique du paysage extérieur.

9. Procédé de représentation graphique selon l'une des revendications précédentes, **caractérisé en ce que** le dispositif de visualisation est un des écrans de la planche de bord de l'aéronef.

10. Procédé de représentation graphique selon l'une des revendications 1 à 8, **caractérisé en ce que** le dispositif de visualisation est un dispositif de visualisation dit « Tête Haute » comportant un élément optique superposant l'image synthétique et/ou l'image réelle sur le paysage extérieur.

## Patentansprüche

1. Verfahren zur grafischen Darstellung einer dreidimensionalen synthetischen Sicht der Außenlandschaft in einem Bordanzeigesystem für ein Luftfahrzeug (A), wobei die grafische Darstellung auf einem Anzeigebildschirm angezeigt wird, der die Steuerungs-und/oder Navigationsinformationen des Luftfahrzeugs aufweist, die der dreidimensionalen synthetischen Darstellung der Außenlandschaft überlagert werden, wobei die synthetische Darstellung bis zu einem ersten bestimmten Abstand (RSVS) berechnet wird,
wobei die dreidimensionale synthetische Darstellung um einen Schwenkwinkel (θ) um eine Achse (X) geschwenkt wird, die in Geländehöhe in einer im Wesentlichen horizontalen und im Wesentlichen zu einer Achse zwischen der Flugrichtung und dem Kurs des Luftfahrzeugs senkrechten Ebene angeordnet wird, wobei sich die Achse mit dem Luftfahrzeug verschiebt, wobei das Verfahren **dadurch gekennzeichnet ist, dass** der Schwenkwinkel derart berechnet wird, dass der Winkel zwischen einer Horizontlinie oder "ZPRL" und der Grenze der berechneten synthetischen Darstellung bis zu einem bestimmten Abstand auf 3 Grad begrenzt wird.

2. Verfahren zur grafischen Darstellung nach Anspruch 1, **dadurch gekennzeichnet, dass** die Achse im Wesentlichen zu der Senkrechten des Luftfahrzeugs angeordnet wird.

3. Verfahren zur grafischen Darstellung nach Anspruch 1, **dadurch gekennzeichnet, dass** die Achse in einem zweiten Abstand inbegriffen zwischen einigen Zehntel Nautikmeilen und vierzig Nautikmeilen vor dem Luftfahrzeug angeordnet wird.

4. Verfahren zur grafischen Darstellung nach Anspruch 1, **dadurch gekennzeichnet, dass** unterhalb einer bestimmten Höhendifferenz zwischen dem Luftfahrzeug und dem überflogenen Gelände der Schwenkwinkel Null beträgt.

5. Verfahren zur grafischen Darstellung nach Anspruch 4, **dadurch gekennzeichnet, dass** die bestimmte Höhendifferenz zwischen dem Luftfahrzeug und dem überflogenen Gelände 7.500 Fuß beträgt.

6. Verfahren zur grafischen Darstellung nach Anspruch 1, **dadurch gekennzeichnet, dass** oberhalb einer bestimmten Höhendifferenz zwischen dem Luftfahrzeug und dem überflogenen Gelände der Schwenkwinkel mit der Höhe zunimmt.

7. Verfahren zur grafischen Darstellung nach einem der vorhergehenden Ansprüche, **dadurch gekennzeichnet, dass** der Schwenkwinkel derart bestimmt wird, dass die Winkeldifferenz zwischen der bis zum ersten bestimmten Abstand berechneten Grenze der dreidimensionalen Darstellung der Außenlandschaft und einer Linie, die den wahren Horizont darstellt, kleiner als ein Grad ist.

8. Verfahren zur grafischen Darstellung nach einem der vorhergehenden Ansprüche, **dadurch gekennzeichnet, dass** die Beobachtungsvorrichtung ein wirkliches Bild der Außenlandschaft aufweist, das der synthetischen Sicht der Außenlandschaft überlagert wird.

9. Verfahren zur grafischen Darstellung nach einem der vorhergehenden Ansprüche, **dadurch gekennzeichnet, dass** die Anzeigevorrichtung einer der Bildschirme des Instrumentenbretts des Luftfahrzeugs ist.

10. Verfahren zur grafischen Darstellung nach einem der Ansprüche 1 bis 8, **dadurch gekennzeichnet, dass** die Anzeigevorrichtung eine "Head-Up" genannte Anzeigevorrichtung ist, die ein optisches Element aufweist, das die Außenlandschaft mit dem synthetischen Bild und/oder dem wirklichen Bild überlagert.

## Claims

1. A method for graphically representing a three-dimensional synthetic view of the outside landscape in an on-board display system for aircraft (A), said graphical representation being displayed on a display screen comprising the piloting and/or navigation information for said aircraft superimposed on said three-dimensional synthetic representation of the outside landscape, said synthetic representation being computed up to a first determined distance (RSVS), said three-dimensional synthetic representation being tilted by a tilt angle (*θ*) around an axis (X) disposed at ground level in a plane substantially horizontal and substantially perpendicular to an axis between the flight direction and the heading of the aircraft, said axis moving with the aircraft, the method being **characterised in that** said tilt angle is computed so that the angle between a line of horizon or "ZPRL" and the limit of the synthetic representation computed up to a first determined distance is limited to 3 degrees.

2. The graphical representation method as claimed in claim 1, **characterised in that** the axis is positioned substantially vertical to the aircraft.

3. The graphical representation method as claimed in claim 1, **characterised in that** the axis is positioned ahead of the aircraft, at a second distance between several tenths of nautical miles and forty nautical miles.

4. The graphical representation method as claimed in claim 1, **characterised in that** below a determined altitude difference between the aircraft and the overflown terrain the tilt angle is zero.

5. The graphical representation method as claimed in claim 4, **characterised in that** the determined altitude difference between the aircraft and the overflown terrain is 7,500 feet.

6. The graphical representation method as claimed in claim 1, **characterised in that** above a determined altitude difference between the aircraft and the overflown terrain the tilt angle increases with the altitude.

7. The graphical representation method as claimed in any one of the preceding claims, **characterised in that** the tilt angle is determined so that the angular difference between the limit of the three-dimensional representation of the outside landscape computed up to the first determined distance and a line representing the true horizon is less than one degree.

8. The graphical representation method as claimed in any one of the preceding claims, **characterised in that** the display device comprises a real image of the outside landscape superimposed on the synthetic view of the outside landscape.

9. The graphical representation method as claimed in any one of the preceding claims, **characterised in that** the display device is one of the screens of the aircraft instrument panel.

10. The graphical representation method as claimed in any one of claims 1 to 8, **characterised in that** the display device is a "Heads Up" display device comprising an optical element superimposing the synthetic image and/or the real image on the outside landscape.
